# EUROPEAN PATENT SPECIFICATION

(11) **EP 0 389 734 B1**
(45) Date of publication and mention of the grant of the patent: **29.09.1993**
(21) Application number: 89830135.3
(22) Date of filing: 28.03.1989
(51) Int. Cl.: B29B 17/02, B03B 9/06

(54) **Manipulating and selecting unit for recycling pressed or not bodies obtained from plastic material containers**
Vorrichtung zum Handhaben, Sortieren und Rückgewinnen von zusammengequetschten und nichtzusammengequetschten Kunststoffbehältern
Dispositif pour la manipulation, sélection et recyclage de conteneurs en matière plastique

(43) Date of publication of application: 03.10.1990
(73) Proprietor: GOVONI SPA, Casumaro Ferrara (IT)
(72) Inventor: Gulmini, Carlo, Casumaro (Ferrera) (IT)
(74) Representative: Sassatelli, Franco T., Dr.

(56) References cited:
- EP-A- 0 057 139
- DE-A- 3 520 486
- DE-A- 3 535 633
- US-A- 4 418 594
- US-A- 4 715 920

## Description

For the surrounding protection and the waste material recovering, at present the exigency is felt of carrying out a selection and a recycling of the empty containers in plastic materials. For this problem are known the systems foreseen in the U.S. Patent no. 4,418,594 for plastic bottles and in the U.S. Patent no. 4,715,920 for plastic beverage containers. The present invention, different to the cited prior art, is particularly used in centres which are concerned with the distribution, for instance foodstuffs, where the necessity may be felt of collecting empty used containers, such as bottles, cans and similar items taking into account the users'necessity of a renewed supply of the same product.

The system can be used to operate either with empty containers with also their plugs or with already compressed recovered bodies. This operational versatility allows to use the system either before the recycling phase -thus carrying out the preliminary selection of empty containers- or after the squeezing phase, thus by operating on the recovered bodies or by conjointly operating the treatment on both bodies.

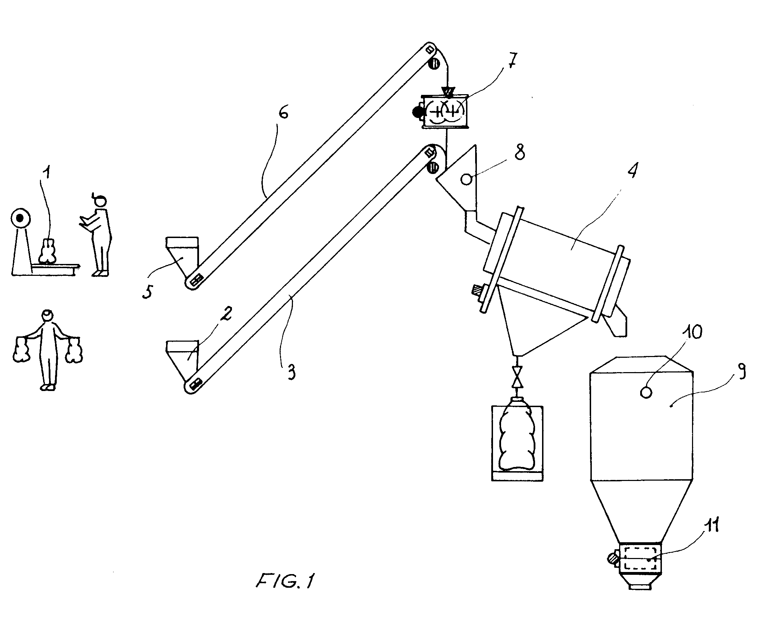

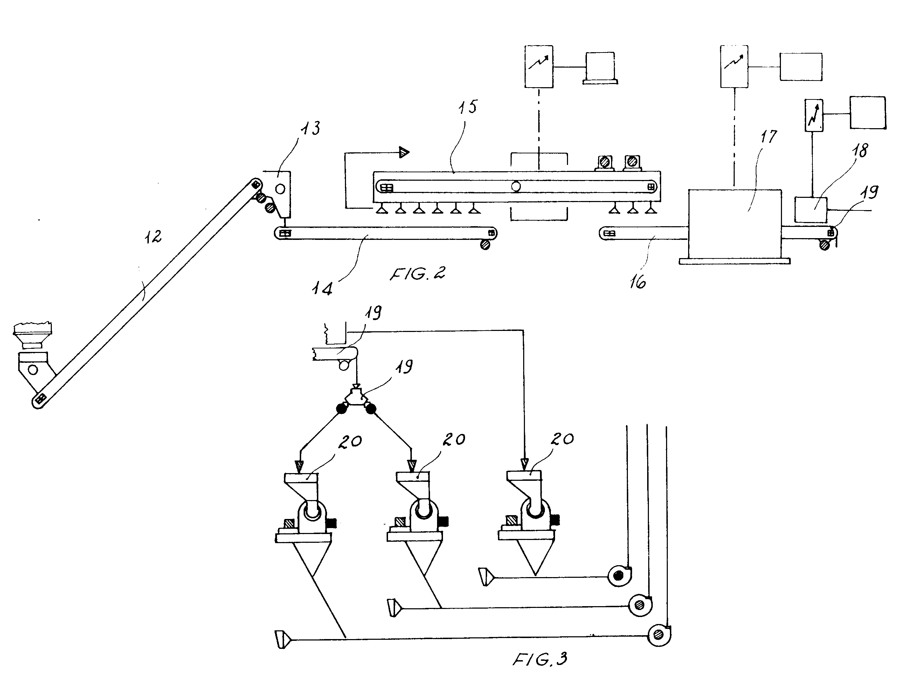

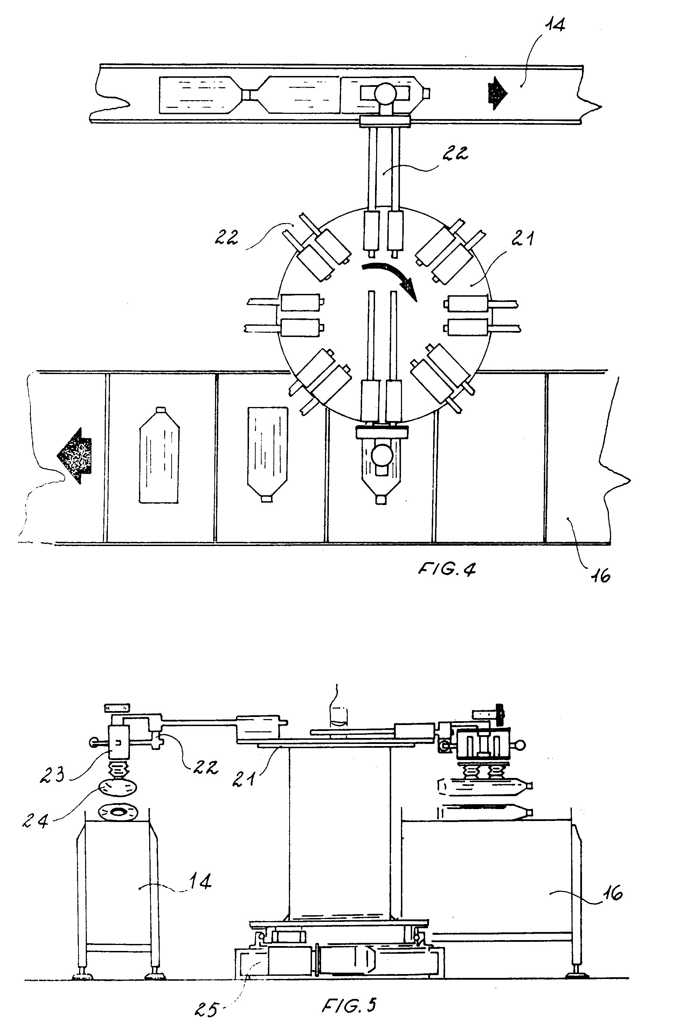

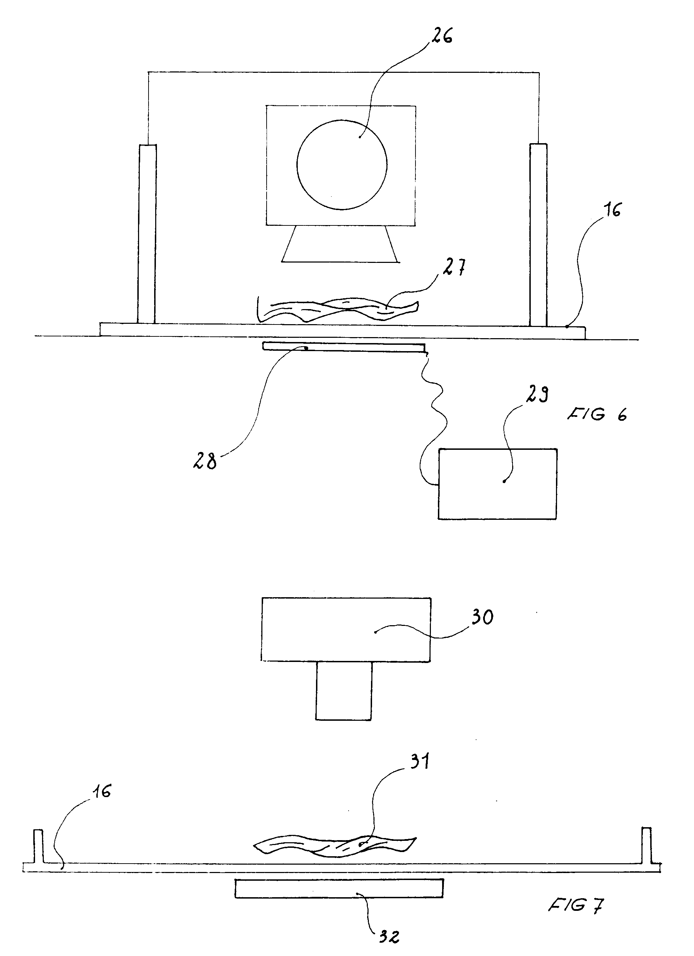

The unit uses initial loading devices for the collection bags as well as for cleaning, to separate the recovered bodies from their plugs. From a receiver, these bodies subsequently arrive at a dosing device and, at last, they reach a manipulator which transfers them on a sector belt conveyor. The body then reaches some stations for recognizing the type and colour of the plastic material. Therefore it is possible to provide for different groups of processed containers formed from a homogenous composition of the material which has been differently selected and can then directly used again. The operational cycle foresees to introduce the already compressed recovered material contained into bags 1 into a first hopper 2. From this one on a first conveyor line 3 they reach a cleaning device with rotating drum 4 which separates the compressed bodies from their plugs. The not previously compressed empty containers instead are charged into a second hopper 5 and on a second conveyor line 6 are sent to a couple of compressing rollers 7. Then the recovered now compressed bodies fall through a hopper 8 on the rotating drum 4 which feeds a receiver 9 equipped with a high level bearing circle 10. By of the volume dosing device 11 a conveyor line 12 is fed which brings to the vibrating alignment hopper 13 to discharge the compressed bodies and to align them according to their larger sides parallel onto another transport line 14. This line 14 conveys the bodies towards manipulator 15 provided with turning suction cups to transfer the compressed, singularised and trimmed bodies from the transport line 14 to a belt conveyor 16. The body is then passed through a recognizing- and an identification stations: a station 17 to recognize the plastic material type and a station 18 to recognize the colour. According to the type of the plastic material and to its colour, which have already been detected in advance, the compressed body is switched by switching device 19 into one of the different grinding mills 20 fitted with a load pneumatic transporter means for the fixed and mobile stockage means all checked by a computerized system. The manipulator 15 provided with turning suction cups consists of a rotating table 21 which turns in synchronism with the transport line 14 and with the conveyor belt 16. For working the arms 22 fitted on the rotating table 21 are radially displaced in the captation zone above the transpor line 14 and the suction cup holders 23 are then lowered to grip the compressed body 24 and lay it down onto the belt conveyor 16 after a 180° rotation generated by a suited motor reducer 25. The station 17 for recognizing the plastic material type comprises an emitting device 26 which on passage of the compressed body 27 on the belt conveyor 16 emits a beam of electromagnetic waves which are picked up by a sensor 28 fitted under the same belt conveyor 16. Said sensor 28 is connected with statistic system 29 which, after having examined the features of the received waves, is able to establish the kind of plastic material and to address the body to the relevant line for subsequent working. The station 18 for recognizing the plastic material colour uses a selecting device for the recovered compressed bodies in plastic material which are selected according to the colour. This enables the separation of compressed bodies in different colours with and economical advantage for the quality of the recovered product. This selecting device uses a reading "CCD" device 30 for analyzing the shape of the compressed body 31 and, on points fixed in advance, estimates the frequency of the electromagnetic wave emitted by this body and consequently evaluates its colour. This last analysis is carried out by means of electronic sensors which establish the colour of the body; for this analysis a neutral source 32 is fitted below the sliding plane of the belt conveyour 16. The manipulating and selecting unit is illustrated in schematic view in the drawings of sheets 1, 2, 3 and 4. In sheet 1 fig. 1 is schematic view of the compartments for loading, cleaning and stocking. In sheet 2 fig. 2 is view of the dosing, singularisation and type recognizing lines of the plastic material and of its colour whereas fig. 3 shows deviation, milling and stocking devices. In sheet 3 fig. 4 is view from the top of the manipulator 15 fitted with turning suction cups while fig. 5 is side view of the motorized assembly. In sheet 4 fig. 6 is front view of the recognizing device for the compressed plastic material type which is fitted with an emitter of appropriate electromagnetic waves, whereas fig. 7 is view of the colour selection phase which is carried out is carried out by means of the reading device 30 on the body arrived in position by means of belt conveyor 16.

## Claims

1. Manipulating and selecting unit for recycling whether or not compressed bodies obtained from plastic material containers, comprising a first hopper (2) and a first conveyor line (3), to receive compressed containers which are to be delivered to a cleaning device with a rotating drum (4) and a second hopper and a second conveyor line, to receive not compressed containers, which are to be sent, via a couple of compressing rollers, through a hopper (8) to the rotating drum (4), the unit further comprising a receiver (9), to receive the compressed bodies from the drum (4) and a conveyor line (12), to bring the compressed bodies to a vibrating alignment hopper (13) to discharge and to align them with their larger sides parallel onto a transport line (14), characterized by a manipulator (15), provided with turning suction cups, to transfer the compressed, singularised and trimmed bodies form the transport line (14) to a conveyor belt (16);
a recognizing- and an identification station (17, 18), to recognise the plastic material type and colour;
a switching device (19), to switch the compressed bodies, depending on their material type and colour, to one of the different grinding mills (20) and
pneumatic transport means, between the grinding mills and mobile or immobile storage means, controlled by a computer system.

2. Manipulating and selecting unit for recycling whether or not compressed bodies from plastic material containers, as per claim 1), where the manipulator (15) consists of a rotating table (21) with arms (22); said arms (22) radially move in the captation zone above the transport line (14) and their suction cup holders (23) are then lowered to grip the compressed body (24) and lay it down onto the belt conveyor (16) after a 180° rotation permitted by a motor reducer (25).

3. Manipulating and selecting unit for recycling whether or not compressed bodies obtained from plastic material containers, as per claim 1), where the station (17) for recognizing the plastic material type comprises an emitting device (26) which on passage of the compressed body on the belt conveyor (16) emits a beam of electromagnetic waves which are picked up by a sensor (28) fitted under the same belt conveyor (16); said sensor (28) is connected with statistic system (29) which, after having examined the features of the received waves, is able to establish the kind of plastic material and addresses the body to the relevant line for the subsequent working.

4. Manipulating and selecting unit for recycling whether or not compressed bodies from plastic material containers, as per claim 1), where the station (18) for recognizing the plastic material colour uses a selecting device which consists of a reading "CCD" device (30) for analyzing the shape of the compressed body and, on points fixed in advance, estimates the frequency of the electromagnetic wave emitted by this body and consequently evaluates its colour, for this analysis a neutral source (32) is fitted below the sliding plane of the belt conveyor (16).

## Patentansprüche

1. Vorrichtung zum Handhaben, Sortieren und Rückgewinnen von zusammengequetschten und nichtzusammengequetschten Kunstofbehältern, die einen ersten Trichter (2) und ein erstes Transportfließband (3) enthält, die die zusammengepreßten Behälter empfängt und an eine Putzvorrichtung mit einer Drehtrommel (4) weiterleitet, die Vorrichtung enthält einen zweiten Trichter und ein zweites Transportfließband, um die nichtzusammen gepreßten Behälter in Empfang zu nehmen, die dann, mittels einesPaars Preßwalzen über einen Trichter (8) an eine Drehtrommel (4) weitergeleitet werden; die Vorrichtung enthält außerdem einen Tank (9), der die zusammen gepreßten Gegenstände von der Trommel (4) entgegennimmt, und ein Transportfließband (12), um die zusammengepreßten Gegenstände zu einem schwingenden Anreihungfülltrichter (13) su bringen und um die zusammengepreßten Gegenstände abzuladen und gemäß ihrer längeren Seite parallel auf ein Transportfließband (14) einzureihen; gekennzeichnet durch einen Manipolator (15), der mit Saugnäpfen ausgestattet ist, um die zusammengepreßten Gegenstände, die jetzt einzeln und in einer Richtung orientiert sind, von einem Transportfließband (14) auf ein anderes Transportfließband (16) überzuführen;
durch eine Erkennungswarte für den Plastikmaterialtyp und einer Erkennungswarte den Farbtyp des Plastikmaterials (17, 18);
durch einen Ableiter (19), der die zusammengepreßten Gegenstände gemäß ihres Farb- und ihres Materialtyps in Richtung von verschiedenen Mahlmühlen (20) ableitet und
durch pneumatischen Transportbänder, die zwischen den Mahlmühlen und den festen und beweglichen Lagerungsmitteln sind, die von einem computerisierten System kontrolliert werden.

2. Vorrichtung zum Handhaben, Sortieren und Rüchgewinne von zusammengequetschten und nichtzusammengequetschten Kunstoffbehältern, nach Anspruch 1), in dem der Manipolator (15) aus einem Drehtisch (21) mit Armen (22) besteht; die Arme bewegen sich in radialer Richtung in der Gegend, wo sie überdem Transportfließband (14) abgefangen wurden und ihre Saugnäpgr (23) werden dann herabgelassen, um die zusammengepreßten Gegenstände (24) zu entnehmen und sie auf dem Transportfließband (16) nach einer Drehung um 180°, die von einer Bewegungsverminderung (25) ausgeläst wurde, abzusetzen.

3. Vorrichtung zum Handhaben, Sortieren und Rückgewinnen von zusammengequetschten und nichtzusammengequetschten Kunstofbehältern, nach Anspruch 1), wo die Erkennungswarte (17) des Plastikmaterialtyps eine Sendervorrich tung (26) enthält, die wenn der zusammengepreßte Gegenstand auf den Transportband (16) passiert, strahlt elektromagnetische Wellen
die von einem Sensor (28), der sich unter demselben Transportband (16) befindet, bemerkt werden; dieser Sensor (28) is mit einem statischen System (29) verbunden, das, nachdem die Eigenschaften der empfangenen Wellen geprüft hat, dazu in der Lage ist, den Plastikmaterialtyp zu bestimmen und den Gegenstand zu der jeweitigen nächsten Bearbeitungsstelle zu leiten.

4. Vorrichtung zum Handhaben, Sortieren und Rückgewinnen von zusammengequetschten und nichtzusammengequetschten Kunstofbehältern, nach Anspruch 1), wo die Erkennungswarte (18) der Farbe des Plastikmaterials eine Auswahlvorrichtung "CCD"(30) benutzt,die dazu dient, die Form des gepreßten Gegenstandas zu prüfen, und zu den vorher festgelegten Punkten die Frequenz der elektromagnetischen Wellen, dei von diesem Gegenstand ausgestrahlt werden zu prüfen und folgerichtig seine Farbe bestimmt; für diese Analyse ist ein neutrale Strahl (32) unterhalb der Fläche des Transportfließbands (16) angebracht.

## Revendications

1. Dispositif pour la manipulation, sélection et recyclage de conteneurs en matière plastique constitué d'une première trémie (2) et d'une première ligne de transport (3) pour reçevoir les conteneurs pressés qui ensuite doivent être envoyés à un dispositif de nettoyage avec un trommel (4), et d'une seconde trémie et d'une seconde ligne de transport pour reçevoir les conteneurs non-pressés qui doivent être envoyés, au moyen d'un couple de rouleaux à écraser et à travers une trémie (8), à un trommel (4); l'unité comprend aussi un déjecteur (9) pour reçevoir les conteneurs pressés par le trommel (4) et une ligne de transport (12) pour amener les conteneurs pressés à la trémie vibrante d'alignement (13) et pour décharger et aligner les mêmes sur la base de leurs grands côtés en parallèle sur une ligne de transpor (14), caracterisée par un manipulateur (15), pourvu de ventouses roulantes, pour transférer les conteneurs pressés, séparés pièce à pièce et orientés d'une ligne de transport (14) vers une bande transporteuse (16);
d'une station de reconnaissance et d'une station d'identification (17, 18) pour reconnaître le type de matière plastique et sa couleur;
par un appareil déviateur (19) pour dévier les conteneurs lourds selon leur type et la couleur du matériel plastique vers un de divers broyeurs de concassage (20) et
de moyens de transport pneumatique, entre le broyeurs de concassage et les moyens de stockage fixes et mobiles, contrôlés par un système informatisé.

2. Dispositif pour la manipulation, sélection et recyclage de conteneurs en matière plastique, selon la revendication 1), où le manipulateur (15) consiste d'un plateau tournant (21) avec des bras (22); les dits bras (22) se dèplacent en étoile dans la zone de captation au dessus de la ligne de transport (14) et leurs porte-ventouses (23) sont ensuite baissés pour prélever le conteneur pressé (24) et le poser sur la bande transporteuse (16) après une rotation à 180° obtenue par un moto-réducteur (25).

3. Dispositif pur la manipulation, sélection et recyclage de conteneurs en matière plastique, selon la revendication 1), où la station (17) pour l'identification du type de matériel plastique comprend un dispositif émetteur (26) qui au passage du conteneur pressé sur la bande transporteuse (16) émet un faisceau d'onde électromagnétiques qui sont relevées par un capteur (28) placé sous le ruban transporteur même (16); le dit capteur (28) est connecté à un système statistique (29) qui, après avoir examiné les caractéristiques des ondes électromagnétiques reques, est à même d'établir le type de matériel plastique et d'adresser le conteneur vers la ligne correspondante pour l'usinage successif.

4. Dispositif pur la manipulation, sélection et recyclage de conteneurs en matière plastique, selon la revendication 1), où la station (18) pour l'identification de la couleur du matériel plastique utilisé se sert d'un sélecteur qui consiste d'un dispositif de lecture "CCD" (30) pour analyser la forme du conteneur pressé et qui, sur les points fixés précédemment, évalue la fréquence des ondes électromagnétiques émises par ce conteneur et conséquemment évalue sa couleur; pour cette analyse une source neutre (32) est positionnée sous le plan de glissement de la bande transporteuse (16).
